# EUROPEAN PATENT APPLICATION

(11) **EP 3 248 891 A1**
(43) Date of publication of application: **29.11.2017**
(21) Application number: 16177115.9
(22) Date of filing: 30.06.2016
(51) Int. Cl.: B65B 29/10, B65B 7/16, B65B 43/52, B65B 61/20, A47J 43/27, B65D 81/32, B01F 11/00, B01F 13/00, B01F 15/00, B01F 15/02, B01F 3/12, B65D 41/02, B65B 7/28

(54) **METHOD AND SYSTEM FOR ASSEMBLING A CONTAINER SYSTEM**

(30) Priority: 27.05.2016 US 201615166501
(71) Applicant: DryBev International, Inc, Dallas, TX 75244 (US)
(72) Inventor: Casey, Theodore, Dallas, TX 75248 (US)
(74) Representative: Gosnall, Toby

(57) **Abstract**

A method and an assembly system for coupling components of a container system (10, 10'), said container system being suitable for separately storing and mixing two or more substances (33, 35). The container system comprises a mixing container having a main container (100) that stores one or more first substances (33). The main container (100) has a first upper opening (110). The container system also includes a storage repository (17) coupled to main container (100), and which stores one or more second substances (35). The storage repository includes a lip (18) defining a second upper opening (19), which has an outside diameter smaller than the diameter of the first upper opening (110). The method and assembly dispose the storage repository (17) within the first upper opening (110) by exerting a first and a second downward force on a first and second portion of the lip (18) of the storage repository, respectively. The assembly system includes a conveyor belt (700) and an assembly apparatus (600) with a motor (610) driving a pulley wheel (612), and a continuous belt (640) rotationally driven by the pulley wheel, the continuous belt (640) rotationally disposed on at least one locking wheel (624, 626).

## Description

### CROSS-REFERENCE TO RELATED APPLICATIONS

This application is a continuation-in-part of, and claims priority to, U.S. Non-Provisional Patent Application No. 14/874,853 entitled "CONTAINER WITH MIXING BLADE" filed on October 5, 2015, which is a continuation-in-part of, and claims priority to, U.S. Non-Provisional Patent Application No. 14/593,748 entitled "CONTAINER WITH MIXING BLADE" filed on January 9, 2015; U.S. Non-Provisional Patent Application No. 14/593,763 entitled "CONTAINER WITH MIXING BLADE" filed on January 9, 2015; U.S. Non-Provisional Patent Application No. 14/593,771 entitled "CONTAINER WITH MIXING BLADE" filed on January 9, 2015; and U.S. Non-Provisional Patent Application No. 14/593,788 entitled "CONTAINER WITH MIXING BLADE" filed on January 9, 2015, all of which are incorporated by reference herein for all purposes.

### TECHNICAL FIELD

Disclosed herein is a method and system for separately storing and mixing two or more substances, and a method and system for assembling portions of a container system.

### DESCRIPTION OF RELATED ART

There exist prior art systems for separately storing and mixing two or more substances. Examples include the systems described in U.S. Patent Nos. 6,059,443, 7,861,855 B2, 8,720,680 B2, and European Patent No. EP 2190751B1, the disclosures of which are incorporated by reference. Disclosed herein is an improved method and system for separately storing and mixing two or more substances, and an improved method and system for assembling portions of a container system.

### SUMMARY OF THE DISCLOSURE

In one aspect, what is disclosed herein is a container system. The container system includes a mixing container having a main container that stores one or more first substances. The main container has a first upper opening. The container system also includes a storage repository coupled to main container, and which stores one or more second substances. The storage repository includes a lip defining a second upper opening, which has an outside diameter smaller than the diameter of the first upper opening. Additionally, the container system includes a mixing blade having an outside diameter smaller than the diameter of the first upper opening and an inside diameter smaller than the outside diameter of the storage repository's lip. The mixing blade also has a plurality of openings. Furthermore, the container system includes a releasable liner placed over the storage repository's lip, and the storage repository's lip forms a seal with a lower surface of the releasable liner.

In another aspect, presently disclosed is a method of separately storing one or more first substances and one or more second substances, and mixing the substances at the time of usage of a product comprising a mixture of the substances. The method involves agitating the container system after removal of the releasable liner so that the one or more first substances and one or more second substances are permitted to mix with another.

In yet another aspect, presently disclosed are methods for coupling components of a container system. In one embodiment, the method involves disposing a storage repository within a first upper opening of a main container of the container system, exerting a downward force on a first portion of a lip of the storage repository, and in response to the first downward force, moving the storage repository into partial locking engagement with the main container. The method further involves exerting a second downward force on a second portion of the lip, and in response to the second downward force, moving the storage repository into full locking engagement with the main container. In another embodiment, the method involves conveying the main container with the storage repository disposed therein on a conveyor belt beneath an assembly apparatus comprising one or more continuous belts rotationally disposed on a first locking wheel and a second locking wheel. The method further involves exerting a first downward force on a first portion of a lip of the storage repository via the first locking wheel exerting the first downward force on the one or more continuous belts as it engages the first portion of the lip, and in response to the first downward force, moving the storage repository into partial locking engagement with the main container. The method further involves exerting a second downward force on a second portion of the lip via the second locking wheel exerting the second downward force on the one or more continuous belts as it engages the second portion of the lip, and in response to the second downward force, moving the storage repository into full locking engagement with the main container.

In still another aspect, presently disclosed is an assembly system for coupling components of a container system. The assembly system may include a conveyor belt and an assembly apparatus. The assembly apparatus may include a motor driving a pulley wheel, and a continuous belt rotationally driven by the pulley wheel, the continuous belt rotationally disposed on at least one locking wheel. In operation, the at least one locking wheel may exert a first downward force on the continuous belt as it engages a first portion of the lip when the conveyor belt moves a main container of the container system with a storage repository disposed therein beneath the assembly apparatus. The storage repository moves into partial locking engagement with the main container in response to the first downward force. The at least one locking wheel exerts a second downward force on the continuous belt as it engages a second portion of the lip when the conveyor belt moves the storage repository disposed therein beneath the assembly apparatus. The storage repository moves into full locking engagement with the main container in response to the second downward force.

### BRIEF DESCRIPTION OF THE DRAWINGS

The disclosure will be better understood and its numerous objects and advantages will become more apparent to those skilled in the art by reference to the following drawings, in conjunction with the accompanying specification, in which:
FIG. 1 is an exploded perspective view of a preferred embodiment of the container system of the present disclosure;
FIG. 1A is an exploded perspective view of an alternative embodiment of the container system of the present disclosure;
FIG. 2 is a perspective view of a preferred embodiment of the container system of the present disclosure with the storage repository covered by a releasable liner;
FIG. 3 is a perspective view of a preferred embodiment of the container system of the present disclosure showing the releasable liner being released;
FIG. 4 is a view of the container system showing the container system being agitated so that the one or more first substances and one or more second substances are mixed;
FIG. 5 is an exploded, front elevational, cross-sectional view of a preferred embodiment of the container system of the present disclosure;
FIG. 6 is a front elevational, cross-sectional view of a preferred embodiment of the container system of the present disclosure with the releasable liner placed over the storage repository;
FIG. 7 is a front elevational, cross-sectional view of a preferred embodiment of the container system of the present disclosure with the releasable liner removed;
FIG. 8A is a top, or overhead, view of the storage repository of a preferred embodiment of the container system of the present disclosure;
FIG. 8B is a perspective view of the storage repository of a preferred embodiment of the container system of the present disclosure;
FIG. 9 is an exploded, front elevational, cross-sectional view of an alternative preferred embodiment of the container system of the present disclosure;
FIG. 10 is a front elevational, cross-sectional view of the alternative preferred embodiment of the container system of the present disclosure with the releasable liner placed over the storage repository;
FIG. 11 is a front elevational, cross-sectional view of the alternative preferred embodiment of the container system of the present disclosure with the releasable liner removed;
FIG. 12 is a side, cross-sectional, perspective view of an alternative mixing blade coupled to the cap of the alternative preferred embodiment of the container system of the present disclosure;
FIG. 13 is a flowchart of an embodiment of a method for orienting and coupling a storage repository to a bottle of the container system of the present disclosure;
FIG. 14 is an exploded schematic side view of a preferred embodiment of an assembly apparatus for orienting and coupling a storage repository to a bottle of the container system of the present disclosure;
FIG. 15 is an exploded, perspective view of a storage repository disposed within a bottle of the container system of the present disclosure; and
FIG. 16 is a schematic side view of an embodiment of an assembly line including the preferred embodiment of the assembly apparatus of FIG. 14.

### DETAILED DESCRIPTION OF EMBODIMENTS

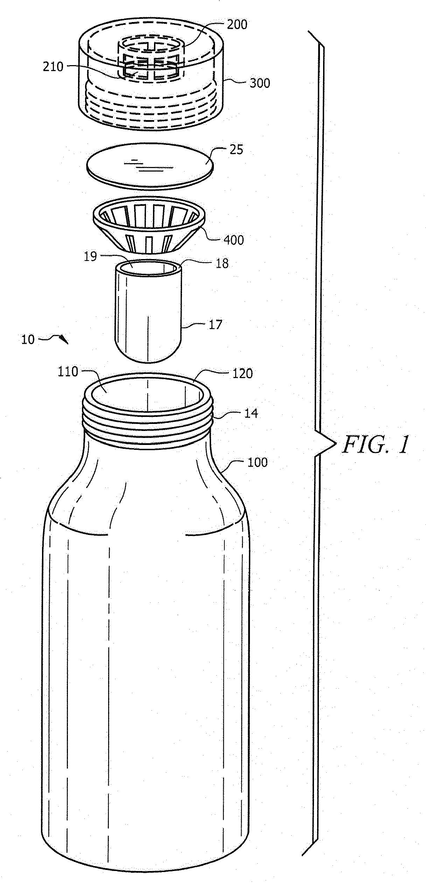

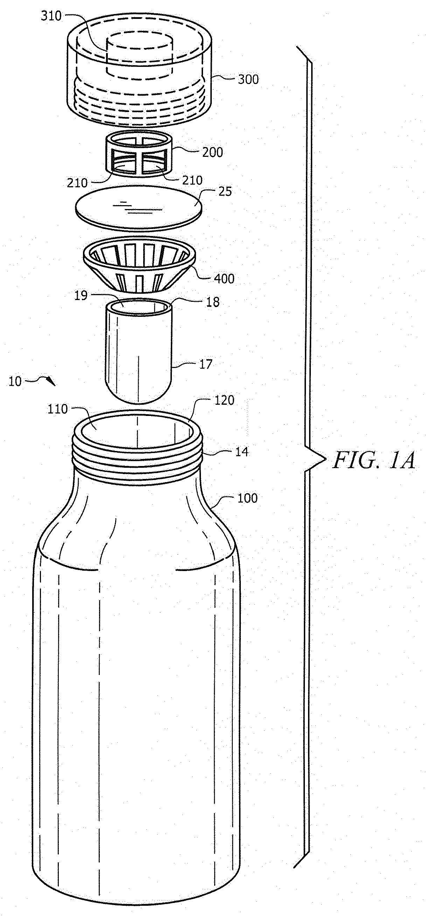

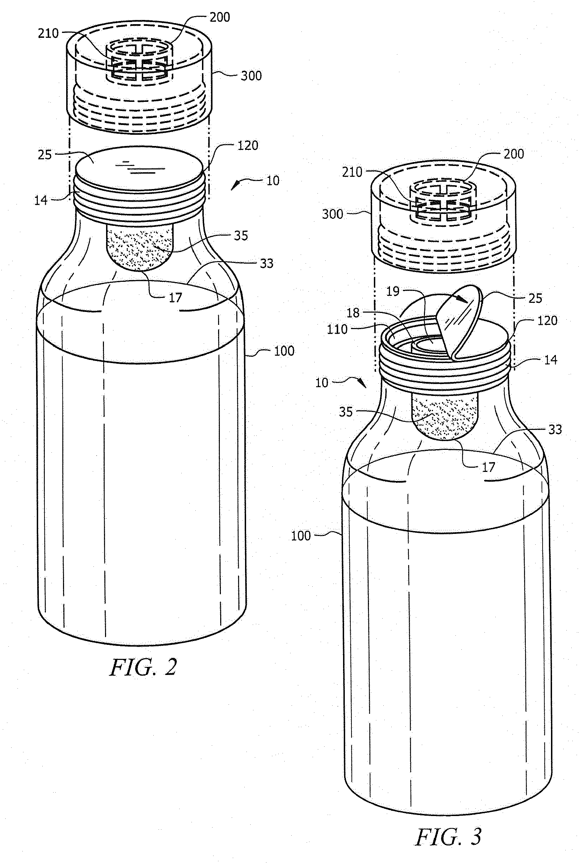

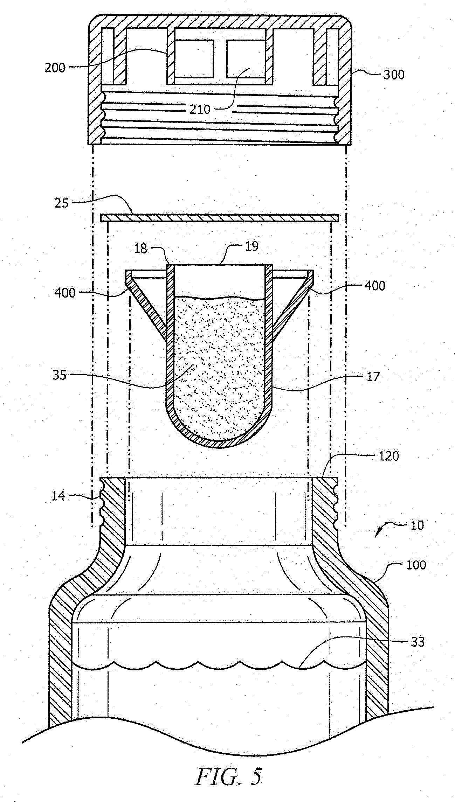

Referring to Figures 1-7, a preferred storage and mixing container 10 comprises a bottle 100 for containing one or more first substances, such as a liquid 33, a storage repository 17 for containing one or more second substances, such as a powder 35. The storage repository 17 is disposed within an upper opening 110 of the bottle 100 and coupled to the neck 120 of the bottle 100. This preferred embodiment includes a releasable liner 25 to cover a second upper opening 19 of the storage repository 17 when the container 10 is used to separately store the powder 35 from the liquid 33, and a cap 300 including a mixing blade 200 that couples to the bottle 100, such as by threads 14.

As depicted in Figures 1-3 and Figures 5-6, the cap 300 may comprise an element 200, sometimes referred to as a mixing blade, which is generally centrally located within the interior of the cap 300. As shown, the element 200 may be generally ring-shaped and have substantially the same diameter as the lip 18 defining an upper opening to the storage repository 17. Further, the element 200 may comprise ports 210 through the walls thereof. One of ordinary skill in the art will appreciate element 200 can be implemented in shapes other than circular shapes, such as a square, rectangle, pentagon, and the like; if non-circular shapes are used for element 200, lip 18 should be formed so that it generally matches the non-circular shape of and has the same perimeter as element 200.

In various implementations, the element 200 may be formed integrally within the cap 300, as shown in Figure 1, or the element 200 may be formed separately from the cap 300 and secured within a ring 310 disposed in cap 300, as shown in Figure 1A. In the implementation of Figure 1A, the element 200 may be secured within the ring 310 via interference fit and/or otherwise coupled to the cap 300 adhesively, mechanically, magnetically or by other means that will be apparent to one of ordinary skill in the art.

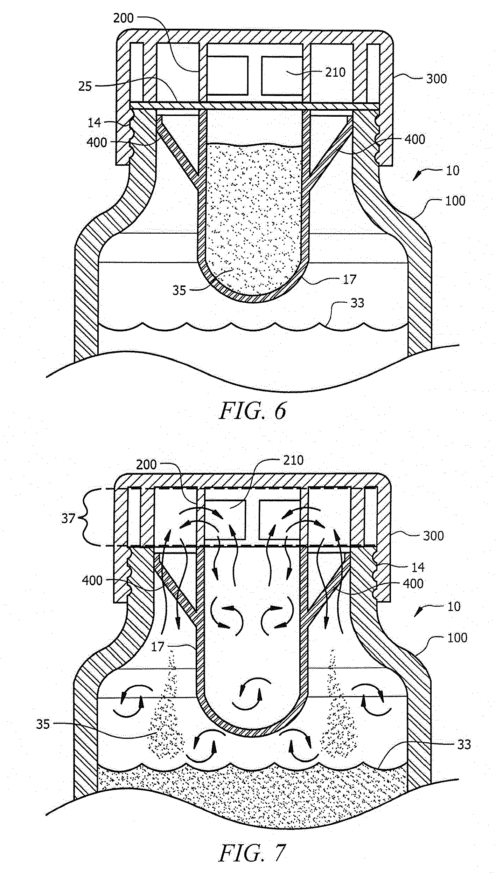

As depicted in Figures 1 and 1A, the container system includes one or more couplings 400 used so that the storage repository 17 will be disposed within an upper opening of the bottle 100 and coupled to the neck 120 of the bottle 100. Disposition of the storage repository 17 within the bottle 100 is depicted in Figures 6 and 7.

As depicted in Figure 6, when the cap 300 is coupled to the bottle 100 while the releasable liner 25 is present, and the mixing blade 200 is contacting an upper surface of the releasable liner 25, a seal is formed between a lower surface of the releasable liner 25 and the lip 18 of the storage repository 17. The seal prevents the one or more first substances 33 from mixing with the one or more second substances 35. As shown in Figure 6, the cap 300 is coupled to the bottle 100 using threads, but one of ordinary skill in the art will appreciate any number of other means can be used to couple cap 300 to bottle 100.

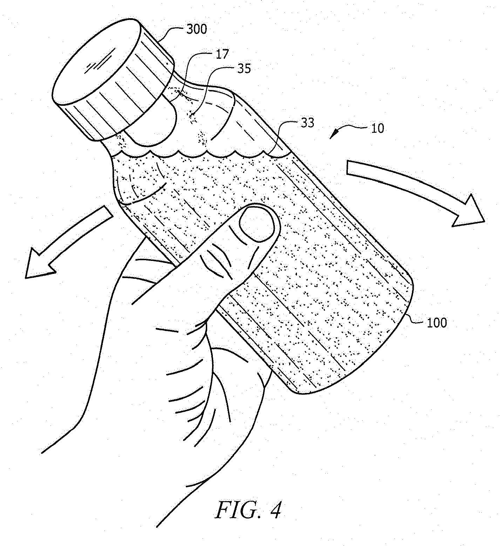

Figure 7 depicts the container system when the releasable liner 25 has been removed. A gap 37 is provided, comprising space above the one or more couplings, continuing above the upper opening 110 of the bottle 100, and below an interior surface of the top of the cap 300, through ports 210, and into additional open space inside mixing blade 200. The gap 37 provides additional space to facilitate mixing of liquid 33 and powder 35. When releasable liner 25 has been removed, liquid 33 may move between the bottle 100, gap 37, and storage repository 17 by passing around the one or more couplings 400 and through the one or more ports 210 of the mixing blade 200. Likewise, when releasable liner 25 has been removed, powder 35, may move between the storage repository 17, gap 37, and the bottle 100 by passing through ports 210 of the mixing blade 200 and the one or more couplings 400. Such mixing is depicted in Figure 7, and occurs when, for example, the bottle 100 is shaken, inverted, or otherwise agitated, one example of such agitation being depicted in Figure 4.

In a preferred embodiment, as depicted in Figures 6 and 7, mixing blade 200 may have substantially the same height as the height of the space created between the upper opening 110 of the bottle 100 and the interior surface of the top of the cap 300, and the diameter of the mixing blade may have substantially the same diameter as the diameter of the lip 18 of the storage repository 17. One of ordinary skill in the art will appreciate that mixing blade 200 can be designed with ports 210 having virtually any shape, including polygonal shapes such as rectangles, squares, and triangles, or curved shapes, such as circles. Also, the number of ports 210 that may be used is not limited to the number depicted in Figures 1-3.

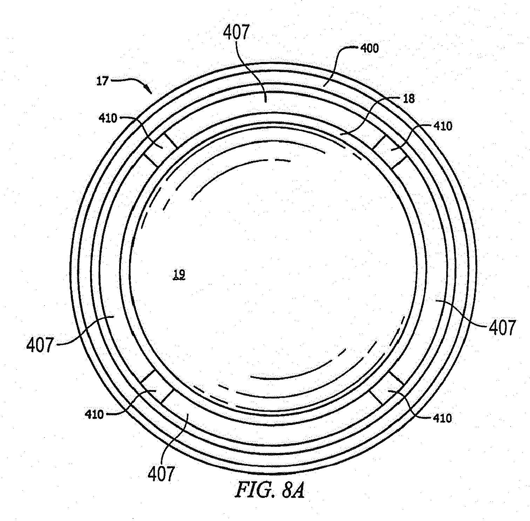

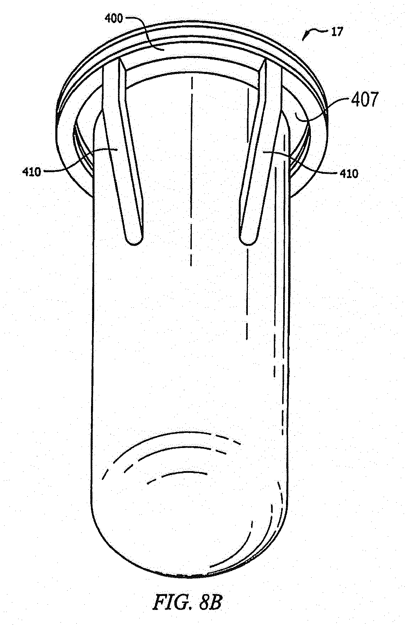

While the one or more couplings 400 may not be designed so that the one or more first substances and one or more second substances are completely prevented from moving between the bottle 100 and storage repository 17, one of ordinary skill in the art will appreciate that various couplings may be used to couple the storage repository 17 to the neck 110 of bottle 100. Couplings 400 may consist of a single piece of material having ports through which the one or more first and second substances may move, or, as depicted in Figures 8A and 8B, multiple pieces of material, such as support arms 410, that are placed apart from one another to create space 407 through which the one or more first and second substances may move. Also, couplings 400 may be manufactured as one piece with the storage repository 17 or bottle 100, or may be separate components.

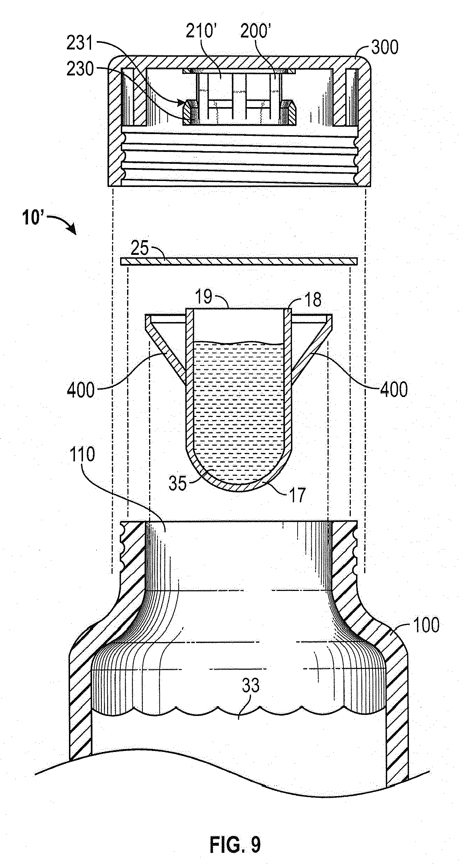

Referring to Figures 9-11, wherein like reference numerals correspond to like components, another alternative preferred storage and mixing container 10' is depicted comprising an alternative element 200', sometimes referred to as an alternative mixing blade. The alternative element 200' comprises one or more ports 210' extending through the walls thereof. The alternative element 200' further comprises a lower portion 230 that extends into a non-vertical wall portion 231 formed adjacent to the ports 210' and providing a lower boundary to the ports 210'. As used herein, the term non-vertical means not perpendicular to the plane defined by upper opening 110 of the bottle 100. One of ordinary skill in the art will appreciate that a non-vertical wall portion can be formed into a variety of linear or curved shapes, or a combination of different shapes.

The alternative element 200' may be generally centrally located within the interior of the cap 300 of the alternative container 10'. Similar to element 200 shown in Figures 1-7, the alternative element 200' may be generally ring-shaped and have substantially the same diameter as the lip 18 defining an upper opening to the storage repository 17. One of ordinary skill in the art will appreciate that the alternative element 200' can be implemented in shapes other than circular shapes, such as a square, rectangle, pentagon, and the like; if non-circular shapes are used for alternative element 200', then lip 18 of the alternative container 10' should be formed so that it generally matches the non-circular shape of and has the same perimeter as alternative element 200'.

In various implementations, the alternative element 200' may be formed integrally within the cap 300, as shown in Figure 1, or the alternative element 200' may be formed separately from the cap 300 and secured within a ring 310 disposed in the cap 300, as shown in Figure 1A. The alternative element 200' may be secured within the ring 310 via interference fit and/or otherwise coupled to the cap 300 adhesively, mechanically, magnetically or by other means that will be apparent to one of ordinary skill in the art.

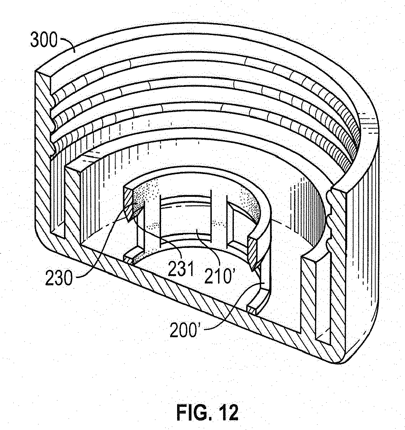

Figure 12 depicts a side, cross-sectional, perspective view of the cap 300 with the alternative element 200' coupled thereto. As depicted in Figure 9-12, each of the substantially vertical wall portion 230 and the non-vertical wall portion 231 of the alternative element 200' comprises opposing sides. The opposing sides of the substantially vertical wall portion 230 may be substantially parallel to each other and substantially perpendicular to the lip 18 of the alternative container 10'. At least one of the opposing sides of the non-vertical wall portion 231 may be tapered so as to extend at an angle from the corresponding side of the substantially vertical wall portion 230 toward the other opposing side of the non-vertical wall portion 231. If both opposing sides of the non-vertical wall portion 231 are tapered, they may extend toward each other at substantially the same angle or at different angles from the corresponding side of the substantially vertical wall portion 230. As shown, the opposing sides of the non-vertical wall portion 231 may terminate substantially at a point adjacent to the ports 210'.

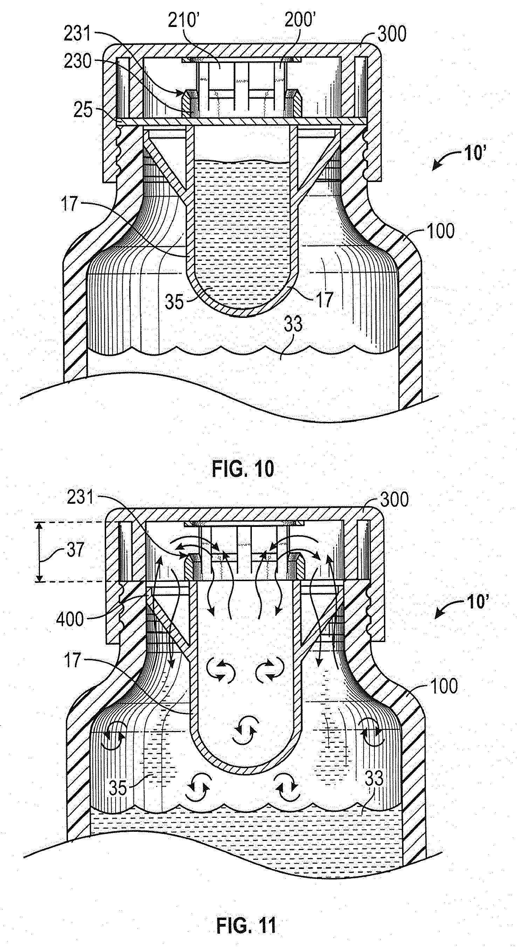

As depicted in Figure 10, when the cap 300 is coupled to the bottle 100 while the releasable liner 25 is present, and the mixing blade 200' is contacting an upper surface of the releasable liner 25, a seal is formed between a lower surface of the releasable liner 25 and the lip 18 of the storage repository 17. The seal prevents the one or more first substances 33 from mixing with the one or more second substances 35.

Figure 11 depicts the container system when the releasable liner 25 has been removed. A gap 37 is provided, comprising space above the one or more couplings, continuing above the upper opening 110 of the bottle 100, and below an interior surface of the top of the cap 300, through ports 210', and into additional open space inside alternative mixing blade 200'. The gap 37 provides additional space to facilitate mixing of liquid 33 and powder 35. When releasable liner 25 has been removed, liquid 33 may move between the bottle 100, gap 37, and storage repository 17 by passing around the one or more couplings 400 and through ports 210' of the alternative mixing blade 200'. Likewise, when releasable liner 25 has been removed, powder 35 may move between the storage repository 17, gap 37, and the bottle 100 by passing through ports 210' of the alternative mixing blade 200' and the one or more couplings 400.

As shown in Figure 11, such mixing occurs when, for example, the bottle 100 is shaken, inverted, or otherwise agitated, one example of such agitation being depicted in Figure 4. During such mixing, the non-vertical surface 231 of the alternative mixing blade 200' may inhibit or prevent the build-up of powder 35, or any other second substance, on the alternative mixing blade 200' and may further enhance mixing as powder 35 moves from the storage repository 17 and through the ports 210' of the alternative mixing blade 200'.

As depicted in Figures 9-11, the alternative mixing blade 200' may have substantially the same height as the height of the space created between the upper opening 110 of the bottle 100 and the interior surface of the top of the cap 300, and the diameter of the alternative mixing blade 200' may have substantially the same diameter as the diameter of the lip 18 of the storage repository 17. One of ordinary skill in the art will appreciate that the alternative mixing blade 200' can be designed with ports 210' having virtually any shape, including polygonal shapes such as rectangles, squares, and triangles, or curved shapes, such as circles. Also, the number of ports 210' that may be used is not limited to the number depicted in Figures 1-12.

The one or more first substances and the one or more second substances may each be in solid form, liquid form, or some combination thereof Examples of substances that may be used in connection with the container system include but are not limited to the following substances: water, dehydrated substances, preservative free substances, dietary supplement mixtures, nutritional mixtures, protein mixtures, dairy based proteins, milk proteins, whey proteins, vegetable based proteins, soy based proteins, amino-acids, beta alanine, vitamins, minerals, creatine, glutamine, L-arginine, phenylalanine, L-Leucine, L-Isoleucine, L-yaline, synephrine, yohimbe, ginseng, ascorbic acid, hydroxyl citric acid, aloe vera, dimethylamyamine, polysaccharide, monosaccharide, maltodextrin, dextrose, fructose, silicon, artificial sweeteners, natural sweeteners, sucralose, artificial or natural flavors, artificial or natural colors, tea, coffee, dairy product, or any other substances which may be consumed by a user either alone, or in combination with any other chemical or other substance.

The bottle 100 and storage repository 17 may be constructed of any material suitable for storing liquid or solid substances. In a preferred embodiment, the bottle 100 is manufactured of polyethylene terephthalate (PET). One of ordinary skill in the art will appreciate that other materials also could be used to manufacture said bottle 100 or storage repository 17, such as other plastics (including High Density Polyethylene and polypropylene), glass, metal, styrofoam and the like. It is contemplated that alternate embodiments of the container system may be constructed of materials suitable for heating within a microwave oven or other heating apparatus. Cap 300, mixing blade 200, alternative mixing blade 200', and the one or more couplings 400 may likewise be constructed of any suitable materials, including those identified above.

The purpose of releasable liner 25 is to prevent the mixing of the one or more first substances and the one or more second substances. One of ordinary skill in the art will therefore appreciate releasable liner 25 can be implemented in the container system of the present disclosure in many different ways. Releasable liner 25 may cover first upper opening 110 of the bottle 100 and the second upper opening 19 of storage repository 17, but one of ordinary skill in the art will appreciate releasable liner 25 need only cover second upper opening 19. Releasable liner 25 may be a gasket, i.e., it may be loosely placed over second upper opening 19 in the absence of cap 300 being placed on bottle 100, so that the releasable liner 25 might fall off when cap 300 is removed. Or, releasable liner 25 might be coupled to bottle 100 and/or lip 18 using an adhesive. Releasable liner 25 could even be formed in the shape of a sphere, such as a marble, or a spherical cone, and be disposed in second upper opening 19 of storage repository 17.

In another aspect, the present disclosure is directed to methods and systems for coupling the storage repository 17 to the bottle 100. In a preferred embodiment, the methods and systems are directed to locking the storage repository 17 to the neck 120 of the bottle 100 within the upper opening 110 of the bottle 100.

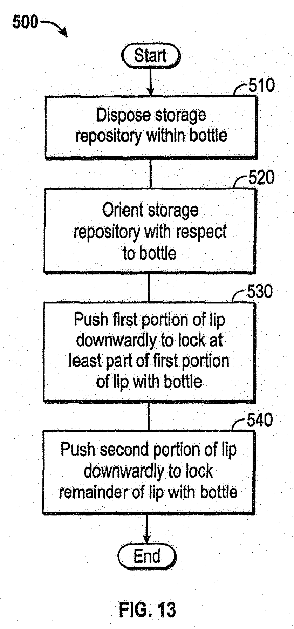

FIG. 13 depicts a flowchart of an embodiment of a method 500 for coupling the storage repository 17 to the bottle 100. In step 510, the storage repository 17 is disposed within the bottle 100. In various embodiments, disposing the storage repository 17 within the bottle 100 may comprise inserting, positioning, setting, placing, dropping, or other methods of disposing the storage repository 17 into the upper opening 110 of the bottle 100. In various embodiments, the bottle 100 may be empty, or the bottle 100 may be at least partially filled with a first substance, such as a liquid 33, before the storage repository 17 is disposed therein. When the storage repository 17 is disposed within the bottle 17 in step 510, the longitudinal axis of the storage repository 17 may be angularly oriented or substantially parallel to the longitudinal axis of the bottle 100. If there is an angular orientation, then in step 520, the storage repository 17 is oriented with respect to the bottle 100 such that the longitudinal axis of the storage repository 17 is substantially parallel to the longitudinal axis of the bottle 100. In step 530, a force of sufficient magnitude is exerted downwardly on a first portion of the lip 18 of the storage repository 17 until at least part of the lip 18 moves downwardly and one or more couplings 400 of the storage repository 17 move into locking engagement with the neck 120 of the bottle 100. In step 540, a force of sufficient magnitude is exerted downwardly on a second portion of the lip 18 of the storage repository 17 until the remainder of the lip 18 moves downwardly and one or more couplings 400 of the storage repository 17 move into locking engagement with the neck 120 of the bottle 100. Each step 510, 520, 530, 540 of the method 500 may be performed manually or via automation, such as via assembly apparatus on an assembly line. In steps 530 and 540, the first portion of the lip 18 may generally be positioned on an opposing side of the lip 18 from the second portion of the lip 18. In an embodiment, the lip 18 of the storage repository 17 may be generally round in shape, and the first portion of the lip 18 may generally be positioned on an opposing semi-circular side of the lip 18 from the second portion of the lip 18. The lip 18 may also be other shapes. In an assembly line arrangement, the first portion of the lip 18 may generally be positioned on a leading side of the lip 18 and the second portion of the lip 18 may generally be positioned on a trailing side of the lip 18, where the terms leading and trailing refer to the direction of movement of a conveyor belt on the assembly line.

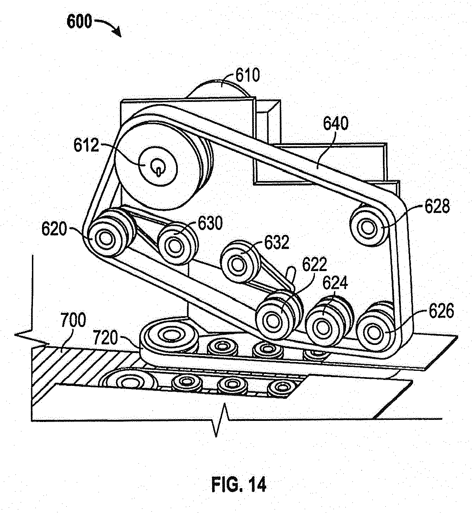

FIG. 14 depicts an exploded side view of a preferred embodiment of an assembly apparatus 600 for orienting and coupling the storage repository 17 to the bottle 100. The assembly apparatus 600 is operable to perform certain steps of the method 500 of FIG. 13. The assembly apparatus 600 comprises a motor 610 rotationally driving a pulley wheel 612. The pulley wheel 612 thereby drives one or more continuous belt(s) 640 disposed about the pulley wheel 612 and a plurality of additional wheels 620, 622, 624, 626, 628. Optionally, one or more of the additional wheels may be disposed on arms 630, 632 that may be stationary or may be movable to allow for upward and downward movement of the associated wheels 620, 622 in response to external forces exerted on the wheels 620, 622 and/or belt 640. In various embodiments, arms 630, 632 may be moveable and may include springs, weights and/or shocks. In an embodiment, wheels 622, 624 and 626 have approximately the same dimensions. In an embodiment, wheels 622, 624 and 626 are nominally 4-inches in diameter and 2-inches wide. In an embodiment, the one or more continuous belt(s) 640 comprises at least one smooth or treaded belt that is nominally 2-inches wide.

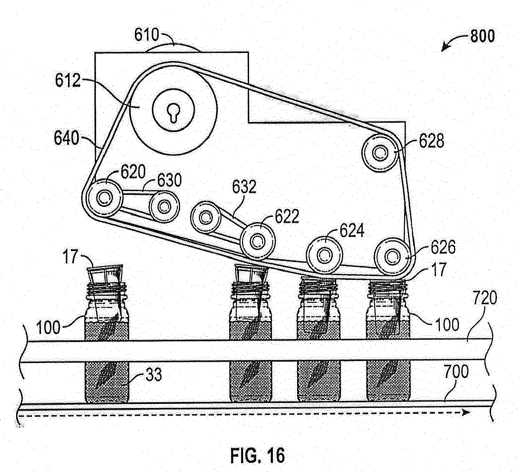

As described in more detail herein with respect to FIG. 16, the assembly apparatus 600 may be used in conjunction with a conveyor belt 700 that is oriented to move bottles 100 with storage repositories 17 disposed therein beneath wheel 620 before reaching orientation wheel 622, first locking wheel 624 and second locking wheel 626 in turn. Orientation wheel 622, first locking wheel 624 and second locking wheel 626, in conjunction with belt 640, are designed to perform the orienting and locking steps 520, 530, 540, respectively, according to method 500 of FIG. 13.

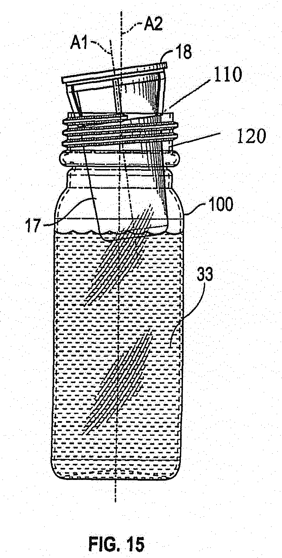

FIG. 15 depicts an exploded, perspective view of a bottle 100 filled with at least one first substance, such as liquid 33, and a storage repository 17 disposed within the upper opening 110 of the bottle 100 such that the storage repository 17 is floating in the liquid 33. As shown in FIG. 15, in this configuration, the longitudinal axis A1 of the storage repository 17 is disposed at an angular orientation with respect to the longitudinal axis A2 of the bottle 100. If the bottle 100 entered the assembly apparatus 600 in this configuration, or any other angularly oriented configuration, the orienting step 520 would be performed to rotate the longitudinal axis A1 of the storage repository 17 to be substantially parallel with respect to the longitudinal axis A2 of the bottle 100.

Variations of the bottle 100 and the storage repository 17 are contemplated. Alternative embodiments may comprise a bottle 100 that is empty, or filled with a non-liquid first substance, or partially filled with a liquid 33 such that the storage repository 17 does not float when it is disposed within the upper opening 110 of the bottle 100. Instead, the lip 18 of the storage repository 17 may rest on the top of the neck 120 of the bottle 100 when the storage repository 17 is disposed within the bottle 100. Other alternative embodiments may comprise a storage repository 17 that is heavier such that the lip 18 of the storage repository 17 may rest on the top of the neck 120 of the bottle 100, regardless of whether the bottle 100 is empty or at least partially filled with at least a first substance. Still other embodiments may comprise a longer storage repository 17 that extends further into the bottle 100, up to engaging and/or resting on the bottom of the bottle 100, regardless of whether the bottle 100 is empty or at least partially filled with at least a first substance. These variations will determine whether or not the orienting step 520 of the method 500 of FIG. 13 is required before the locking steps 530, 540 are performed.

FIG. 16 is a schematic side view of an embodiment of an assembly line 800, which may include a conveyor belt 700, a plurality of side gripper belts 720, and the preferred embodiment of the assembly apparatus 600 of FIG. 14. In an embodiment, bottles 100 filled with liquid 33, each having a storage repository 17 disposed therein as depicted in FIG. 15, are conveyed by conveyor belt 700 and/or side gripper belts 720 toward and into the assembly apparatus 600. In an embodiment, the motor 610 of the assembly apparatus 600 rotates the pulley wheel 612 and the one or more continuous belt(s) 640 at nominally the same speed as the conveyor belt 700 and the side gripper belts 720.

As the bottles 100 with storage repositories 17 disposed therein approach the assembly apparatus 600, they move between the side gripper belts 720, which hold the bottles 100 on the conveyor belt 700 as they move through the assembly apparatus 600. The bottles 100 with storage repositories 17 disposed therein move beneath wheel 620 and first engage the assembly apparatus 600 at orientation wheel 622 via continuous belt 640. In an embodiment, orientation wheel 622 is positioned at an appropriate height off the conveyor belt 700 such that, if the longitudinal axis A1 of the storage repository 17 is already generally aligned with the longitudinal axis A2 of the bottle 100, then the one or more continuous belt(s) 640 does not engage the lip 18 of the storage repository 17. However, if the longitudinal axis A1 of the storage repository 17 is out of alignment with the longitudinal axis A2 of the bottle 10, then the one or more continuous belt(s) 640 engages and exerts primarily a lateral force onto the lip 18 of the storage repository 17 as the bottle 100 moves beneath orientation wheel 622. This lateral force tends to rotate the storage repository 17 with respect to the bottle 100 such that its longitudinal axis A1 generally aligns with the longitudinal axis A2 of the bottle 100 before reaching the first locking wheel 624. In this manner, orientation wheel 622 and the one or more continuous belt(s) 640 achieve the orienting step 520 according to method 500 of FIG. 13.

As the bottles 100 with properly oriented storage repositories 17 therein continue moving with respect to the assembly apparatus 600, they engage the first locking wheel 624 via continuous belt 640. In an embodiment, the first locking wheel 624 is positioned at an appropriate height off the conveyor belt 700 such that the continuous belt 640 exerts primarily a downward force onto a first portion of the lip 18 of the storage repository 17. This downward force is sufficient to cause at least part of the first portion of the lip 18 to move downwardly until one or more arms or couplings 400 of the storage repository 17 move into locking engagement with the neck 120 of the bottle 100 as the bottle 100 moves beneath the first locking wheel 624. In this manner, the first locking wheel 624 and the continuous belt 640 achieve the first locking step 530 according to method 500 of FIG. 13.

As the bottles 100 with partially locked storage repositories 17 therein continue moving with respect to the assembly apparatus 600, they engage the second locking wheel 626 via the one or more continuous belt(s) 640. In an embodiment, the second locking wheel 626 is positioned at an appropriate height off the conveyor belt 700 such that the one or more continuous belt(s) 640 exerts primarily a downward force onto a second portion of the lip 18 of the storage repository 17. This downward force is sufficient to cause the remainder of the lip 18 to move downwardly until one or more couplings 400 of the storage repository 17 move into locking engagement with the neck 120 of the bottle 100 as the bottle 100 moves beneath the second locking wheel 626. In this manner, the second locking wheel 626 and the one or more continuous belt(s) 640 achieve the second locking step 540 according to the method 500 of FIG. 13.

Variations of the assembly apparatus 600 are contemplated. An alternative embodiment may comprise only one or two of the three wheels 622, 624, 626 set at appropriate height(s) and operating in conjunction with the continuous belt 640 to perform the orienting step 520 and/or locking steps 530, 540. For example, in some circumstances, the orienting step 520 may not be required because the longitudinal axis A1 of the storage repository 17 is already generally aligned with the longitudinal axis A2 of the bottle 100 when the storage repository 17 is disposed in the bottle 100 in step 510. In that case, any one of the three wheels 622, 624, 626 may be eliminated and the remaining two wheels may be positioned to perform locking steps 530, 540 of the method 500 in conjunction with belt(s) 640. Alternatively, a single one of the three wheels 622, 624, 626 may be positioned to perform both of the locking steps 530, 540 of the method 500 in conjunction with belt(s) 640. Other alternative embodiments of assembly apparatus may comprise a single larger wheel, or dual larger wheels, to replace the three smaller wheels 622, 624, 626. The single or dual larger wheels may operate with or without the continuous belt(s) 640. Other modifications of assembly apparatus 600 are contemplated so long as the modified assembly apparatus is operable to perform the orienting step 520 and/or the locking steps 530, 540 of the method 500 of FIG. 13.

It is believed the operation and construction of the methods and systems disclosed herein will be apparent from the foregoing description. While the methods and systems shown and described has been characterized as being preferred, it will be readily apparent that various changes and modifications could be made without departing from the spirit and scope of the disclosure.

## Claims

1. A method for coupling components of a container system (10, 10'), the container system (10, 10') comprising:
(a) a main container (100) for holding one or more first substances (33), said main container (100) having a first upper opening (110);
(b) a storage repository (17) for holding one or more second substances (35), said storage repository (17) including a lip (18) defining a second upper opening (19), said lip (18) having an outside diameter smaller than a diameter of the first upper opening (110);
wherein the method comprises:
(1) disposing the storage repository (17) within the first upper opening (110);
(2) exerting a first downward force on a first portion of the lip (18);
(3) in response to the first downward force, moving the storage repository (17) into partial locking engagement with the main container (100);
(4) exerting a second downward force on a second portion of the lip (18); and
(5) in response to the second downward force, moving the storage repository (17) into full locking engagement with the main container (100).

2. The method according to claim 1, further comprising:
orienting a longitudinal axis (A1) of the storage repository (17) to be substantially parallel to a longitudinal axis (A2) of the main container (100) before exerting the downward force on the first portion of the lip (18).

3. The method according to claim 1, further comprising:
conveying the main container (100) with the storage repository (17) disposed therein on a conveyor belt (700) beneath an assembly apparatus (600) comprising one or more continuous belts (640) rotationally disposed on a first locking wheel (624, 626) and a second locking wheel (624, 626).

4. The method according to claim 3, wherein exerting the first downward force on the first portion of the lip (18) occurs via the first locking wheel (624, 626) exerting the first downward force on the one or more continuous belts (640) as it engages the first portion of the lip (18).

5. The method according to claim 3 or claim 4, wherein exerting the second downward force on the second portion of the lip (18) occurs via the second locking wheel (624, 626) exerting the second downward force on the one or more continuous belts (640) as it engages the second portion of the lip (18).

6. The method according to claim 3, claim 4 or claim 5, further comprising:
orienting a longitudinal axis (A1) of the storage repository (17) to be substantially parallel to a longitudinal axis (A2) of the main container (100) via an orienting wheel (622) of the assembly apparatus (600) exerting a lateral force on the one or more continuous belts (640) as it engages at least part of the lip (18).

7. The method according to any of the preceding claims, wherein at least one of the following occurs:
disposing the storage repository (17) within the first upper opening (110) comprises placing the storage repository (17) into the first upper opening (110); and
disposing the storage repository (17) within the first upper opening (110) comprises dropping the storage repository (17) into the first upper opening (110).

8. The method according to any of the preceding claims, further comprising:
at least partially filling the main container (100) with one or more first substances (33) before disposing the storage repository (17) within the first upper opening (110).

9. The method of according to any of the preceding claims, wherein the first portion of the lip (18) is generally positioned on an opposing side of the lip (18) from the second portion of the lip (18).

10. An assembly system (800) for coupling components of a container system (10, 10'), the container system (10, 10') comprising:
(a) a main container (100) for holding one or more first substances (33), said main container (100) having a first upper opening (110);
(b) a storage repository (17) for holding one or more second substances (35), said storage repository (17) disposed within the first upper opening (110) of the main container (100), said storage repository (17) including a lip (18) defining a second upper opening (19), said lip (18) having an outside diameter smaller than a diameter of the first upper opening (110);
wherein the assembly system (800) comprises:
a. a conveyor belt (700); and
b. an assembly apparatus (600), the assembly apparatus (600) comprising:
a. a motor (610) driving a pulley wheel (612); and
b. a continuous belt (640) rotationally driven by the pulley wheel (612), the continuous belt (640) rotationally disposed on at least one locking wheel (624, 626);
c. wherein the at least one locking wheel (624, 626) exerts a first downward force on the continuous belt (640) as it engages a first portion of the lip (18) when the conveyor belt (700) moves the main container (100) with the storage repository (17) disposed therein beneath the assembly apparatus (600);
d. wherein the storage repository (17) moves into partial locking engagement with the main container (100) in response to the first downward force;
e. wherein the at least one locking wheel (622, 624, 626) exerts a second downward force on the continuous belt (640) as it engages a second portion of the lip (18) when the conveyor belt (700) moves the storage repository (17) disposed therein beneath the assembly apparatus (600); and
f. wherein the storage repository (17) moves into full locking engagement with the main container (100) in response to the second downward force.

11. The assembly system (800) according to claim 10, further comprising:
an orientation wheel (622) of the assembly apparatus (600) positioned upstream of the at least one locking wheel (624, 626) with respect to the conveyor belt (700) direction of movement;
wherein the continuous belt (640) is rotationally disposed on the orientation wheel (622) and the at least one locking wheel (624, 626);
wherein the orientation wheel (622) exerts a lateral force on the continuous belt (640) while it engages at least a portion of the lip (18) when the conveyor belt (700) moves the main container (100) with the storage repository (17) disposed therein beneath the assembly apparatus (600); and
wherein the lateral force reorients the storage repository (17) such that a longitudinal axis (A1) of the storage repository (17) is substantially parallel to a longitudinal axis (A2) of the main container (100).

12. The assembly system (800) of claim 10 or claim 11, wherein the rotational speed of the motor (610) is substantially the same as the speed of the conveyor belt (700).
